Europäisches Patentamt

European Patent Office

Office européen des brevets

(11) Veröffentlichungsnummer: **0 148 407**
A1

## EUROPÄISCHE PATENTANMELDUNG

(21) Anmeldenummer: 84114705.1

(22) Anmeldetag: 04.12.84

(51) Int. Cl.⁴: **G 09 F 7/20**

(30) Priorität: 15.12.83 DE 8335996 U

(43) Veröffentlichungstag der Anmeldung: 17.07.85
Patentblatt 85/29

(84) Benannte Vertragsstaaten: **AT BE CH DE FR GB IT LI LU NL SE**

(71) Anmelder: **Heidt-Cizerle, Trude-Helga, Bertholdstrasse 17, D-7518 Bretten 1 (DE)**

(72) Erfinder: **Heidt-Cizerle, Trude-Helga, Bertholdstrasse 17, D-7518 Bretten 1 (DE)**

(74) Vertreter: **Vogel, Georg, Hermann-Essig-Strasse 35, D-7141 Schwieberdingen (DE)**

(54) **Vorrichtung zum Befestigen eines Kennzeichnungsschildes an einem Trägerstab.**

(57) Die Erfindung betrifft eine Vorrichtung zum Befestigen eines Kennzeichnungsschildes (23) an einem Trägerstab (10). An einem Abschnitt eines Federbandes wird ein Bügel (15) mit Mittelschenkel (20) und Seitenschenkeln (16, 18) gebogen. Die beiden Seitenschenkel (16, 18) tragen Durchbrüche (17, 19), die bei verringertem Abstand der Seitenschenkel (16, 18) fluchten und den Trägerstab (10) aufnehmen. Der Bügel hält sich durch Spannung der Seitenschenkel (16, 18) am Trägerstab. Der Mittelschenkel trägt eine Klemmtasche (21), die mit dem Mittelschenkel (20) eine Steckaufnahme (24) für das Kennzeichnungsschild (23) bildet.

## Vorrichtung zum Befestigen eines
## Kennzeichnungsschildes an einem Trägerstab

Die Erfindung betrifft eine Vorrichtung zum Befestigen eines Kennzeichnungsschildes an einem Trägerstab.

Derartige Vorrichtungen werden insbesondere in Lebensmittelgeschäften, in denen Molkereiprodukte, Backwaren, Fleisch und Wurstwaren angeboten werden, eingesetzt.

Wie das DE-GM 79 36 536 zeigt, ist dabei schon versucht worden, den Trägerstab selbst so zu verformen, daß er einen Fuß bildet, der in einen vertikalen Trägerabschnitt übergeht. Dieser vertikale Trägerstab ist am freien Ende mehrfach abgebogen, so daß er eine Klemmaufnahme für das Kennzeichnungsschild bildet. Diese bekannte Vorrichtung erfordert einen mehrfach gebogenen Trägerstab, der nicht einfach herstellbar ist und im Bereich der Klemmaufnahme auch nicht die Elastizität besitzt, um verschieden starke Kennzeichnungsschilder aufnehmen zu können. Darüber hinaus hat das so gehaltene Kennzeichnungsschild zum Fuß stets dieselbe Stellung, was nicht immer die optimale Ausrichtung des Kennzeichnungsschildes in die Blickrichtung des Käufers oder Kunden zuläßt.

Es ist Aufgabe der Erfindung, eine Vorrichtung der eingangs erwähnten Art zu schaffen, die in einfacher Ausgestaltung eine Aufnahme verschieden starker Kennzeichnungsschilder zuläßt und dennoch mit dem Kennzeichnungsschild an dem Trägerstab in die optimale Stellung eingestellt werden kann.

Diese Aufgabe wird nach der Erfindung dadurch gelöst, daß aus einem Abschnitt eines Federbandes ein Bügel mit Mittelschenkel und den beiden Seitenschenkeln gebogen ist, daß die beiden Seitenschenkel mit Durchbrüchen versehen sind, die bei verringertem Abstand der Seitenschenkel fluchten und den Trägerstab aufnehmen, daß sich die Seitenschenkel des auf dem Trägerstab aufgeschobenen Bügels unter Spannung an dem Trägerstab abstützen und daß auf der Außenseite des Mittelschenkels eine federnde Klemmlasche angebracht ist, die mit dem Mittelschenkel des Bügels eine Steckaufnahme für das Kennzeichnungsschild bildet.

Der federnde Bügel hält sich selbst an dem Trägerstab fest und kann leicht axial am Trägerstab verstellt und um diesen Trägerstab verdreht werden. Dabei kann durch Verringerung des Abstandes der Seitenschenkel des Bügels die Verspannung am Trägerstab aufgehoben werden, wodurch die Verstellung und/oder Verdrehung des Bügels mit dem Kennzeichnungsschild erleichtert wird. Die Klemmlasche hat soviel Eigenelastizität, daß sie verschieden starke Kennzeichnungsschilder an dem Mittelschenkel des Bügels eindeutig festhalten kann.

Ist vorgesehen, daß die Seitenschenkel in der Ausgangsstellung so am Mittelschenkel abgebogen sind, daß sich ihr Abstand zueinander zu den freien Erden hin vergrößert, dann kann durch parallele Ausrichtung der Seitenschenkel das Fluchten der Durchbrüche in den Seitenschenkeln bewirkt werden.

Das Einführen des Trägerstabes wird dabei dadurch erleichtert, daß bei einem Trägerstab mit rundem Querschnitt die als Bohrungen ausgebildeten Durchbrüche in den Seitenschenkeln des Bügels im Durchmesser größer sind als der Durchmesser des Trägerstabes und daß das freie Ende des Trägerstabes mit einer sich verjüngenden Phase versehen ist.

Das Verändern des Abstandes der Seitenschenkel des Bügels wird nach einer Ausgestaltung dadurch erleichtert, daß die Seitenschenkel als Handhaben auf der dem Mittelschenkel abgekehrten Seite des Trägerstabes abstehen.

Das in der Steckaufnahme gehaltene Kennzeichnungsschild wird nach einer Ausgestaltung dadurch besser einsehbar, daß der Mittelschenkel des auf dem Trägerstab aufgesteckten und darauf festgelegten Bügels in spitzem Winkel zum Trägerstab von unten nach oben abnimmt. Die Klemmlasche begrenzt dabei eine nach oben offene Steckaufnahme für das Kennzeichnungsschild.

Die Verbindung zwischen der Klemmlasche und dem Bügel ist nach einer Ausgestaltung so ausgeführt, daß die Klemmlasche mittels eines abgebogenen Befestigungsflansches mit der Außenseite des anschließenden Seitenschenkels verbunden ist.

Die vertikale Ausrichtung und Abstellung des Trägerstabes wird nach einer Ausgestaltung so gelöst, daß der Trägerstab in einer vertikal ausgerichteten Buchse gehalten ist, die auf der Oberseite einer Standplatte befestigt ist. Dabei ist vorgesehen, daß die Buchse selbst einen stirnseitigen Befestigungsflansch trägt, der mit der Standplatte verbunden ist. Ist die Standplatte rund, dann ist die Buchse im Randbereich der Standplatte angebracht, um genügend Platz für das Kennzeichnungsschild zu haben.

Die Erfindung wird anhand eines in der Zeichnung dargestellten Ausführungsbeispiels näher erläutert. Es zeigt:

Fig. 1 in Seitenansicht den vertikal gehaltenen Trägerstab mit aufgestecktem Bügel und eingestecktem Kennzeichnungsschild, und

Fig. 2 die Draufsicht auf den vom Trägerstab gelösten Bügel bei abgezogenem Kennzeichnungsschild.

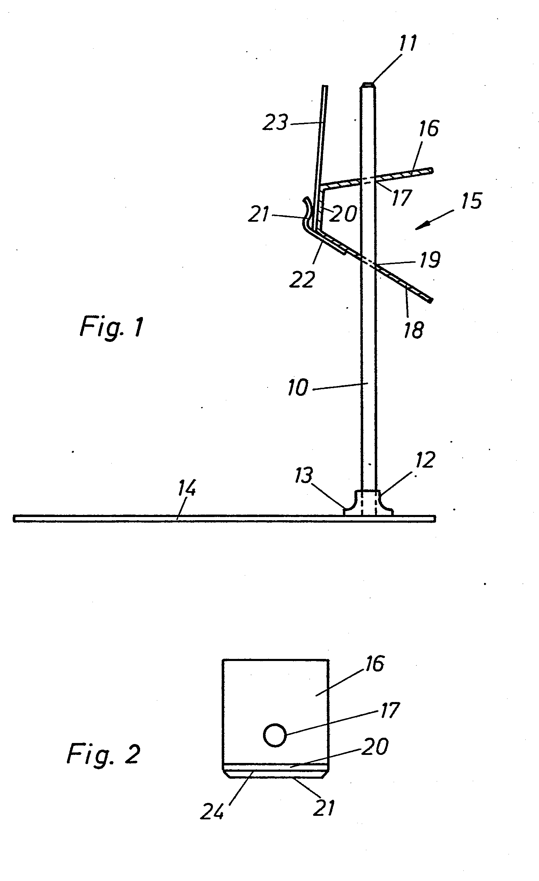

Der Trägerstab 10 beim Ausführungsbeispiel nach Fig. 1 hat runden Querschnitt und ist am oberen Ende mit der sich verjüngenden Phase 11 versehen, die das Aufstecken des federnden Bügels 15 erleichtert. Das untere Ende des Trägerstabes 10 ist in der Buchse 12 festgehalten, die auf der Oberseite der Standplatte 14 befestigt ist. Hat diese Standplatte 14 runden Querschnitt, dann ist die Buchse 12 im Randbereich derselben angebracht, um nach einer Seite genügend Raum für das Kennzeichnungsschild zu haben und um gegebenenfalls die Standplatte 14 mit den angebotenen und ausgezeichneten Gegenständen beschweren zu können. Die Buchse 12 hat dabei am unteren Ende den Befestigungsflansch 13, der mit der Oberseite der Standplatte 14 fest verbunden ist. Handelt es sich ausschließlich um Metallteile, dann kann die Verbindung mittels Löten oder Schweißen erfolgen.

Auf den Trägerstab 10 wird der Bügel 15 aufgesteckt, der aus einem Abschnitt eines Federbandes gebogen ist. An dem Mittelschenkel 20 stehen die Seitenschenkel 16 und 18 ab. In der Ausgangsstellung wird der Abstand der Seitenschenkel 16 und 18 zu ihren freien Enden hin größer. In jedem Seitenschenkel 16 und 18 ist eine Bohrung als Durchbruch 17 und 19 eingebracht. Diese Bohrungen haben einen größeren Durchmesser als der Trägerstab 10 und sind so eingebracht, daß sie erst bei Verkleinerung des Abstandes der Seitenschenkel 16 und 18 so fluchten, daß der Bügel 15 auf den Trägerstab 10 aufgesteckt werden kann. Dabei stehen die Seitenschenkel 16 und 18 auf der dem Mittelschenkel 20 abgekehrten Seite des Trägerstabes 10 als Handhaben ab, die das Zusammendrücken der Seitenschenkel 16 und 18 erleichtern. Werden nach dem Aufstecken des Bügels 15 auf den Trägerstab 10 die Seitenschenkel 16 und 18 losgelassen, dann wollen sich die Seitenschenkel 16 und 18 aufgrund ihrer Eigenelastizität in ihre Ausgangsstellung zurückstellen. Dies verhindert der Trägerstab 10, so da die Seitenschenkel 16 und 18 unter Spannung an dem Trägerstab 10 anliegen. Der Bügel 15 kann an jeder Stelle der Längsrichtung des Trägerstabes 10 festgelegt werden und bleibt in jeder Stellung am Trägerstab 10 um 360° in Umfangsrichtung einstellbar.

0148407

Auf der Außenseite des Mittelschenkels 20 des Bügels 15 ist die Klemmlasche 21 angebracht, die mit dem Mittelschenkel 20 die Steckaufnahme 24
für das Kennzeichnungsschild 23 bildet. Die Klemmlasche 21 ist dabei
mittels des Befestigungsflansches 22 mit der anschließenden Außenseite
des Seitenschenkels 18 verbunden. Der Mittelschenkel 20 steht in der
Spannstellung des Bügels 15 in spitzem Winkel zum Trägerstab 10, wobei
der Abstand zum Trägerstab 10 nach oben hin abnimmt. Die Klemmlasche 21
ist dabei so angebracht, daß auch die Steckaufnahme 24 nach oben offen
ist. Das in die Steckaufnahme 24 eingesteckte Kennzeichnungsschild 23
steht dann etwas schräg und ist besser einsehbar. Der Bügel 15 kann
jedoch auch um 180° verdreht auf den Trägerstab 10 aufgesteckt werden,
so daß die Neigung des Kennzeichnungsschildes 23 in die andere Richtung
gebracht wird. Da die Klemmlasche 21 federnd ausgebildet ist, kann die
Steckaufnahme 24 auch unterschiedlich dicke Kennzeichnungsschilder 23
aufnehmen, wobei die Klemmlasche 21 für einen ausreichenden Halt sorgt.

0148407

Frau
Trude-Helga Heidt-Cizerle
Bertholdstraße 17

7518  B r e t t e n

- 1 -

Ansprüche

1.  Vorrichtung zum Befestigen eines Kennzeichnungsschildes an einem
    Trägerstab,
    dadurch gekennzeichnet,
    daß aus einem Abschnitt eines Federbandes ein Bügel (15) mit
    Mittelschenkel (20) und den beiden Seitenschenkeln (16,18) gebogen
    ist,
    daß die beiden Seitenschenkel (16,18) mit Durchbrüchen (17,19)
    versehen sind, die bei verringertem Abstand der Seitenschenkel
    (16,18) fluchten und den Trägerstab (10) aufnehmen,
    daß sich die Seitenschenkel (16,18) des auf dem Trägerstab (10)
    aufgeschobenen Bügels (15) unter Spannung an dem Trägerstab (10)
    abstützen und
    daß auf der Außenseite des Mittelschenkels (20) eine federnde
    Klemmlasche (21) angebracht ist, die mit dem Mittelschenkel (20)
    des Bügels (15) eine Steckaufnahme (24) für das Kennzeichnungsschild (23) bildet.

2.  Vorrichtung nach Anspruch 1,
    dadurch gekennzeichnet,

daß die Seitenschenkel (16,18) in der Ausgangsstellung so am Mittelschenkel (20) abgebogen sind, daß sich ihr Abstand zueinander zu den freien Enden hin vergrößert.

3. Vorrichtung nach Anspruch 1 oder 2,
dadurch gekennzeichnet,
daß bei einem Trägerstab (10) mit rundem Querschnitt die als Bohrungen ausgebildeten Durchbrüche (17,19) in den Seitenschenkeln (16,18) des Bügels (15) im Durchmesser größer sind als der Durchmesser des Trägerstabes (10).

4. Vorrichtung nach einem der Ansprüche 1 bis 3,
dadurch gekennzeichnet,
daß die Seitenschenkel (16,18) als Handhaben auf der dem Mittelschenkel (20) abgekehrten Seite des Trägerstabes (10) abstehen.

5. Vorrichtung nach einem der Ansprüche 1 bis 4,
dadurch gekennzeichnet,
daß der Mittelschenkel (20) des auf dem Trägerstab (10) aufgesteckten und darauf festgelegten Bügels (15) in spitzem Winkel zum Trägerstab (10) von unten nach oben abnimmt.

6. Vorrichtung nach einem der Ansprüche 1 bis 5,
dadurch gekennzeichnet,
daß die Klemmlasche (21) eine nach oben offene Steckaufnahme (24) begrenzt.

7. Vorrichtung nach einem der Ansprüche 1 bis 6,
dadurch gekennzeichnet,
daß die Klemmlasche (21) mittels eines abgebogenen Befestigungsflansches (22) mit der Außenseite des anschließenden Seitenschenkels (18) verbunden ist.

8. Vorrichtung nach einem der Ansprüche 1 bis 7,
   dadurch gekennzeichnet,
   daß der Trägerstab (10) in einer vertikal ausgerichteten Buchse (12) gehalten ist, die auf der Oberseite einer Standplatte (14) befestigt ist.

9. Vorrichtung nach Anspruch 8,
   dadurch gekennzeichnet,
   daß die Buchse (12) selbst einen stirnseitigen Befestigungsflansch (13) trägt, der mit der Standplatte (14) verbunden ist.

10. Vorrichtung nach Anspruch 8 oder 9,
    dadurch gekennzeichnet,
    daß die Standplatte (14) rund ist und
    daß die Buchse (12) im Randbereich der Standplatte (14) angebracht ist.

11. Vorrichtung nach einem der Ansprüche 1 bis 10,
    dadurch gekennzeichnet,
    daß das freie Ende des Trägerstabes (10) mit einer sich verjüngenden Phase (11) versehen ist.

0148407

Fig. 1

Fig. 2

Europäisches
Patentamt

EUROPÄISCHER RECHERCHENBERICHT

0148407
Nummer der Anmeldung

EP 84 11 4705

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl 4) |
|---|---|---|---|
| X | FR-A-2 474 729 (B. DEMONCHAUX) * Figur 1, Anspruch 1 * | 1 | G 09 F 7/20 |
| A | US-A-3 181 260 (J. SCHEROTTO) * Figur 1 * | 1 | |
| A | DE-A-3 319 828 (FEHLBAUM & CO.) * Seite 3, Zeilen 13-25, Seite 4, Zeilen 22-26 * | 1 | |
| A | FR-A-1 589 683 (F. NICOLINI) * Figur 2 * | | |

RECHERCHIERTE
SACHGEBIETE (Int. Cl.4)

G 09 F 1/10
G 09 F 7/18
G 09 F 7/20

Der vorliegende Recherchenbericht wurde für alle Patentansprüche erstellt.

| Recherchenort BERLIN | Abschlußdatum der Recherche 13-03-1985 | Prüfer FUCHS R |
|---|---|---|